(19) Europäisches Patentamt
European Patent Office
Office européen des brevets

(11) Veröffentlichungsnummer : **0 470 930 A1**

# (12) EUROPÄISCHE PATENTANMELDUNG

(21) Anmeldenummer : **91810604.8**

(22) Anmeldetag : **29.07.91**

(51) Int. Cl.[5] : **C09B 62/006,** C09B 29/095, D06P 1/38

(30) Priorität : **06.08.90 CH 2559/90**

(43) Veröffentlichungstag der Anmeldung : **12.02.92 Patentblatt 92/07**

(84) Benannte Vertragsstaaten : **BE CH DE ES FR GB IT LI**

(71) Anmelder : **CIBA-GEIGY AG**
**Klybeckstrasse 141**
**CH-4002 Basel (CH)**

(72) Erfinder : **Tzikas, Athanassios, Dr., Unt. Rütschetenweg 36**
**CH-4133 Pratteln (CH)**

## (54) Reaktivfarbstoffe, deren Herstellung und Verwendung.

(57) Die neuen Reaktivfarbstoffe der Formel

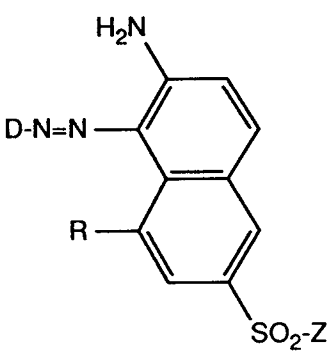

(1),

worin D, R und Z jeweils die im Anspruch 1 angegebene Bedeutung haben, eignen sich besonders zum Färben und Bedrucken von cellulosehaltigen Fasermaterialien und geben, bei hoher färberischer Ausbeute, Färbungen und Drucke mit guten Echtheitseigenschaften.

EP 0 470 930 A1

Reaktivfarbstoffe werden seit langem in grossem Umfang für das Färben und Bedrucken von Textilien aus Fasermaterialien eingesetzt, und es steht heute eine grosse Anzahl von brauchbaren Reaktivfarbstoffen mit unterschiedlichen Eigenschaften und für verschiedene Anwendungsbereiche zur Verfügung. Angesichts der immer höheren Anforderungen an Reaktivfärbungen in bezug auf Wirtschaftlichkeit, Applikationstechnik und Echtheitsniveau ist der erreichte technische Stand aber vielfach nicht voll befriedigend.

So ist z.B. häufig festzustellen, dass der Fixiergrad zu gering, und die Differenz zwischen Ausziehgrad und Fixiergrad zu gross ist (hoher Seifverlust), so dass ein erheblicher Teil des Reaktivfarbstoffes für den Färbevorgang verloren geht. Ferner lässt das Aufbauvermögen in vielen Fällen zu wünschen übrig.

Der vorliegenden Erfindung lag die Aufgabe zugrunde, neue verbesserte Reaktivfarbstoffe zu finden, die eine hohe Reaktivität und ein gutes Aufbauvermögen besitzen, die mit hoher Fixierausbeute gefärbt werden können, die vor allem für das Ausziehfärbeverfahren geeignet sind, und die auf cellulosehaltigem Fasermaterial nass- und lichtechte Färbungen ergeben.

Es hat sich gezeigt, dass die weiter unten definierten neuen Reaktivfarbstoffe diesen Anforderungen genügen.

Gegenstand der Erfindung sind Verbindungen der Formel

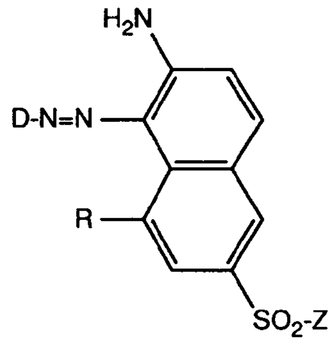

(1),

worin D der Rest einer gegebenenfalls weitersubstituierten Diazokomponente der Benzol- oder Naphthalinreihe ist, R für Wasserstoff, Sulfo oder einen Rest $-SO_2-Z$ steht und Z Vinyl, β-Sulfatoethyl, β-Thiosulfatoethyl, β-Phosphatoethyl oder β-Chlorethyl bedeutet, sowie deren Metallkomplexe.

Bei D handelt es sich z.B. um den Rest eines Aminobenzols, Aminonaphthalins, Phenylazo-aminobenzols, Naphthylazo-aminobenzols, Phenylazo-aminonaphthalins oder Naphthylazo-aminonaphthalins, welcher jeweils unsubstituiert oder, vorzugsweise, wie unten geschildert substituiert sein kann. D ist bevorzugt ein gegebenenfalls substituierter Rest eines Aminobenzols, 1- oder 2-Aminonaphthalins oder Phenylazo-aminobenzols und besonders bevorzugt der Rest eines gegebenenfalls substituierten Phenylazo-aminobenzols.

Geeignete Substituenten am Rest D sind z.B.: $C_1$-$C_4$-Alkyl, womit generell Methyl, Ethyl, n- oder iso-Propyl oder n-, iso-, sec- oder tert.-Butyl umfasst ist; $C_1$-$C_4$-Alkoxy, worunter generell Methoxy, Ethoxy, n- oder iso-Propoxy oder n-, iso-, sec.- oder tert.-Butoxy zu verstehen ist; Amino; N-Mono- oder N,N-Di-$C_1$-$C_4$-Alkylamino, wobei das Alkyl gegebenenfalls z.B. durch -OH, $-OCOCH_3$, $-OSO_3H$, -CN oder Halogen weitersubstituiert sein kann, z.B. Methylamino, Ethylamino, n- oder iso-Propylamino oder n-, iso-, sec- oder tert.-Butylamino, N,N-Dimethyl- oder -Diethylamino, β-Chlorethylamino, β-Cyanethylamino, β-Acetyloxyethylamino, N-(β-Hydroxyethyl),N-ethyl-amino, β-Sulfatoethylamino, N,N-Di-(β-hydroxyethyl)-amino, N,N-Di-(β-Sulfatoethyl)-amino oder Hydroxypropylamino; Phenylamino; $C_1$-$C_4$-Alkanoylamino, besonders Acetylamino, Propionylamino; Benzoylamino; $C_1$-$C_4$-Alkoxycarbonyl, z.B. Methoxy- oder Ethoxycarbonyl; Nitro; Cyano; Trifluormethyl; Halogen, worunter generell z.B. Fluor, Chlor und Brom zu verstehen ist; Hydroxy; Carboxy; Sulfo; Sulfomethyl; Sulfamoyl; N-Mono- oder N,N-Di-$C_1$-$C_4$-Alkylsulfamoyl; N-Phenylsulfamoyl; Carbamoyl; N-Mono- oder N,N-Di-$C_1$-$C_4$-Alkylcarbamoyl; Ureido; $C_1$-$C_4$-Alkylsulfonyl, z.B. Methyl- oder Ethylsulfonyl.

D steht vorzugsweise für einen unsubstituierten oder durch $C_1$-$C_4$-Alkyl, $C_1$-$C_4$-Alkoxy, Halogen, Carboxy und/oder Sulfo substituierten Rest eines Aminobenzols, 1- oder 2-Aminonaphthalins oder Phenylazo-aminobenzols. Besonders bevorzugt ist für D die Bedeutung eines unsubstituierten oder durch Methyl, Methoxy, Chlor, Carboxy und/oder Sulfo substituierten Restes eines Aminobenzols, 1- oder 2-Aminonaphthalins oder 4-Phenylazo-aminobenzols.

Eine bevorzugte Ausführungsform der vorliegenden Erfindung betrifft Verbindungen der Formel (1), worin D den Rest eines 1- oder 2-Aminonaphthalins oder 4-Phenylazoaminobenzols darstellt, der jeweils 1 bis 4 Sulfogruppen trägt und gegebenenfalls durch Methyl, Methoxy oder Chlor weitersubstituiert ist.

Eine besonders bevorzugte Ausführungsform der vorliegenden Erfindung betrifft Verbindungen der Formel (1), worin D den Rest eines 4-Phenylazo-aminobenzols, welches 1- oder 2-Sulfogruppen trägt, bedeutet.

Z hat vorzugsweise die Bedeutung Vinyl, β-Sulfatoethyl oder β-Chlorethyl und steht besonders bevorzugt für β-Sulfatoethyl. R bedeutet vorzugsweise Wasserstoff.

Weist D zur Komplexbildung befähigte Gruppen wie z.B. Hydroxy, Carboxy, Amino usw. auf, kommen auch Metallkomplexe der Verbindungen der Formel (1) in Frage. Als Metallatome sind hierbei Cu (1:1-Komplex) oder Fe, Cr oder Co (1:2-Komplex) bevorzugt. Die Verbindungen der Formel (1) sind jedoch besonders bevorzugt metallfrei.

Gute färberische Ergebnisse werden erhalten mit Verbindungen der Formel

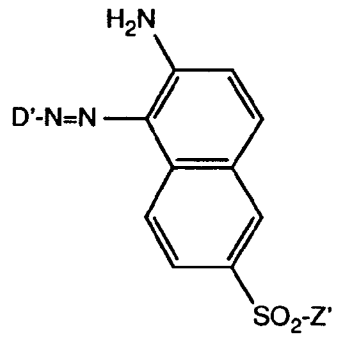

(1a),

worin D′ den Rest eines unsubstituierten oder durch $C_1$-$C_4$-Alkyl, $C_1$-$C_4$-Alkoxy, Halogen, Carboxy und/oder Sulfo substituierten Aminobenzols, 1- oder 2-Aminonaphthalins oder Phenylazo-aminobenzols bedeutet und Z′ Vinyl, β-Sulfatoethyl oder β-Chlorethyl ist.

Besonders gute färberische Ergebnisse werden erhalten mit Verbindungen der Formel

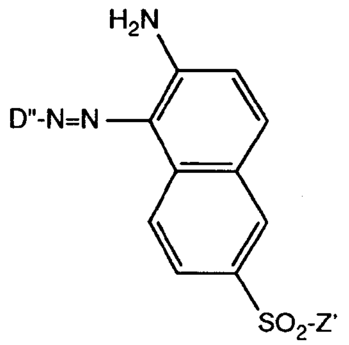

(1b),

worin D″ den Rest eines 1- oder 2-Aminonaphthalins oder 4-Phenylazo-aminobenzols, der jeweils 1 bis 4 Sulfogruppen trägt und gegebenenfalls durch Methyl, Methoxy oder Chlor weitersubstituiert ist, bedeutet und Z′ für Vinyl, β-Sulfatoethyl oder β-Chlorethyl steht.

Eine insbesondere bevorzugte Ausführungsform der vorliegenden Erfindung betrifft Verbindungen der Formel

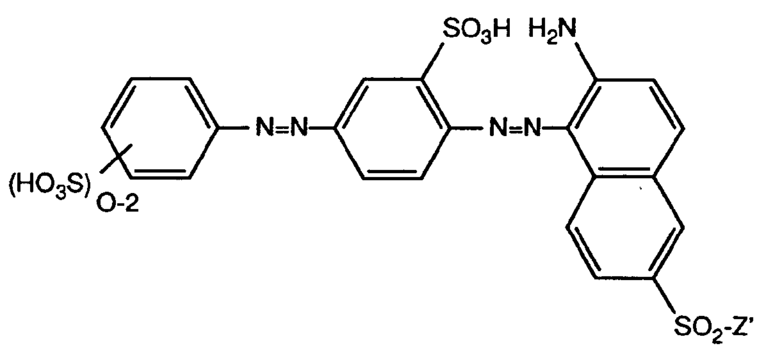

(1c),

worin Z′ Vinyl, β-Sulfatoethyl oder β-Chlorethyl bedeutet.

Die Verbindungen der Formel (1) können in an sich bekannter Weise hergestellt werden, z.B. indem man eine Diazokomponente der Formel

$$D\text{-}NH_2 \quad (2),$$

worin D die zuvor angegebene Bedeutung hat, diazotiert, mit einer Verbindung der Formel

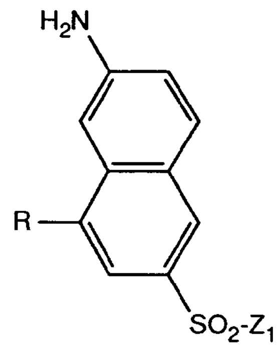

(3),

worin R die zuvor angegebene Bedeutung hat und $Z_1$ die zuvor für Z angegebene Bedeutung hat oder für β-Hydroxyethyl steht, kuppelt und gegebenenfalls den Rest $-SO_2-Z_1$ in einen Rest $-SO_2-Z$ umwandelt.

Die Diazotierung der Verbindungen der Formel (2) erfolgt hierbei in an sich bekannter Weise, z.B. mit einem Nitrit, etwa mit einem Alkalimetallnitrit wie Natriumnitrit unter sauren Bedingungen, z.B. im salzsauren Medium, bei Temperaturen von z.B. -5 und 25°C, vorzugsweise bei 0 bis 10°C. Das Nitrit wird im allgemeinen im Überschuss eingesetzt und der Nitritüberschuss nach der Diazotierung in üblicher Weise, z.B. mit Amidsulfonsäure zerstört.

Die kupplungsreaktion wird ebenfalls unter üblichen an sich bekannten Bedingungen durchgeführt. Man arbeitet zweckmässig im wässrigen Medium bei einem leicht sauren, neutralen oder alkalischen pH-Wert, vorzugsweise bie einem leicht sauren pH-Wert, der z.B. 2 bis 6 und bevorzugt 3,5 bis 5 beträgt, und Temperaturen von ca. 0 bis 30°C, vorzugsweise 0 bis 20°C. Der pH-Wert kann durch Zugabe von Basen, z.B. Alkalimetallhydroxiden, -carbonaten oder -acetaten, Ammoniak oder organischen Aminen, eingestellt und während der kupplung konstant gehalten werden.

Der im kupplungsprodukt enthaltene Rest $-SO_2-Z_1$ kann anschliessend z.B. mittels geeigneter Additions-, Eliminierungs- und/oder Veresterungsreaktionen in einen beliebigen Rest $-SO_2-Z$ umgewandelt werden.

Die Sulfatierung der Hydroxyethylsulfonylgruppe erfolgt z.B. durch Umsetzung mit konzentrierter Schwefelsäure bei 0°C bis mässig erhöhter Temperatur. Die Sulfatierung kann auch durch Reaktion der Hydroxyverbindung mit ca. zwei Aequivalenten Chlorsulfonsäure pro Hydroxygruppe in einem polaren organischen Lösungsmittel, z.B. N-Methylpyrrolidon, bei 10 bis 80°C erfolgen. Vorzugsweise erfolgt die Sulfatierung durch Eintragen der Hydroxyverbindung in Schwefelsäuremonohydrat bei Temperaturen zwischen 5 und 15°C.

Handelt es sich bei dem Rest $-SO_2-Z_1$ um einen β-Sulfatoethylsulfonylrest, so kann dieser mit halogenwasserstoffabspaltenden Mitteln, z.B. mit Natriumhydroxid, behandelt werden und dabei in einen Vinylsulfonylrest übergehen.

Die Umwandlung des Vinylsulfonylrestes $-SO_2-Z_1$ in einen Rest $-SO_2-CH_2-CH_2-SSO_3H$ oder $-SO_2-CH_2-CH_2-OPO_3H_2$ erfolgt z.B. mittels Addition von Thioschwefelsäure oder Phosphorsäure in bekannter Weise.

Es können darüberhinaus auch mehrere Umwandlungen des Restes $-SO_2-Z_1$ nacheinander durchgeführt werden. So kann z.B. der β-Hydroxyethylsulfonylrest durch Veresterung zunächst zum β-Sulfatoethylsulfonylrest und durch Eliminierung anschliessend zum Vinylsulfonylrest umgesetzt werden.

Die nach dem Verfahren erhaltenen Verbindungen der Formel (1) können jeweils in an sich bekannter Weise, z.B. durch Aussalzen, Filtration und Waschen, isoliert und gereinigt werden.

Die Ausgangsprodukte der Formeln (2) und (3) sind allgemein bekannt oder können analog zu bekannten Verfahren erhalten werden.

Die erfindungsgemässen Verbindungen der Formel (1) sind faserreaktiv. Unter faserreaktiven Farbstoffen sind solche zu verstehen, die mit den Hydroxylgruppen der Cellulose oder mit den reaktiven Zentren von natürlichen und synthetischen Polyamiden unter Bildung kovalenter chemischer Bindungen zu reagieren vermögen.

Die Verbindungen der Formel (1) eignen sich als Reaktivfarbstoffe zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet,

die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten.

Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Ebenfalls geeignet sind sie für das sogenannte Kaltverweilverfahren, wonach der Farbstoff zusammen mit dem Alkali auf dem Foulard aufgebracht wird und danach durch mehrstündiges Lagern Raumtemperatur fixiert wird. Nach dem Fixieren werden die Färbungen und Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten.

Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-FarbstoffBindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen der Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: 17,3 Teile 1-Aminobenzol-4-sulfonsäure werden in 40 Teilen Eiswasser und 25 Teilen konz. HCl mit einem Überschuss an Natriumnitrit diazotiert und das überschüssige Natriumnitrit nach einem 1 stündigen Nachrühren mit Amidosulfonsäure zerstört. Danach werden 33, 1 Teile 2-Amino-6-β-sulfatoethylsulfonylnaphthalin zugegeben und der pH-Wert mittels Natriumacetat auf ca. 4,5 eingestellt und konstant gehalten. Man lässt ca. 2 Stunden bei pH 4,5 und einer Temperatur von ca. 10 bis 15 °C nachrühren und isoliert dann den Farbstoff durch Aussalzen mit Kalium- und Natriumchlorid. Nach dem Trocknen erhält man den Farbstoff, der in Form der freien Säure der Formel

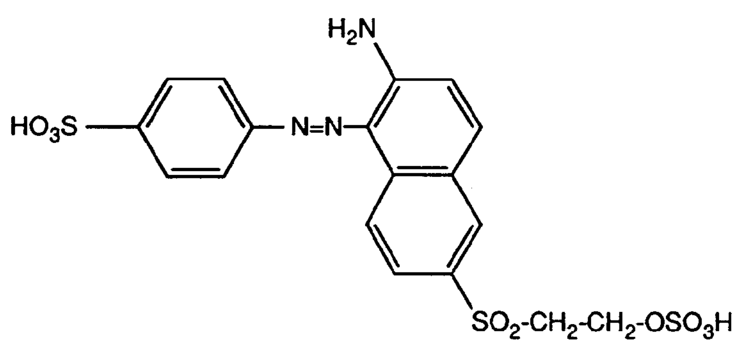

entspricht, als orangefarbenes Pulver, welches Baumwolle und Wolle in orangen Farbtönen mit guten Allgemeinechtheiten, insbesondere sehr guten Nassechtheiten, färbt.

Beispiel 2: 17,3 Teile 1-Aminobenzol-4-sulfonsäure werden wie im Beispiel 1 beschrieben diazotiert. Anschliessend werden in die Lösung der Diazoniumverbindung 25,1 Teile 2-Amino-6-β-hydroxyethylsulfonylnaphthalin eingetragen, der pH-Wert durch Zugabe von Natriumacetat auf 3,5 bis 4 eingestellt und 5 Stunden gerührt.

Die entstandene Monoazoverbindung wird mit Kaliumchlorid ausgesalzen, abfiltriert, getrocknet, anschliessend in 400 Teile konzentrierter Schwefelsäure eingetragen und bis zur vollständigen Lösung gerührt. Diese Lösung wird auf Eis gegeben und der Farbstoff, der dem Farbstoff des Beispiels 1 entspricht, anschliessend ausgesalzen, gewaschen und getrocknet.

Führt man die Veresterung mit Phosphorsäure oder Phosphoroxytrichlorid anstelle von Schwefelsäure durch, erhält man die analoge β-Phosphatoethylsulfonylverbindung.

Behandelt man die oben hergestellte β-Sulfatoethylsulfonylverbindung ca. 30 Minuten bei pH 10 und Raumtemperatur, und stellt dann pH-Wert auf 6 zurück, erhält man die analoge Vinylsulfonylverbindung.

Beispiele 3-13: Analog zu den Beispielen 1 und 2 werden die in der folgenden Tabelle aufgeführten Farbstoffe der allgemeinen Formel

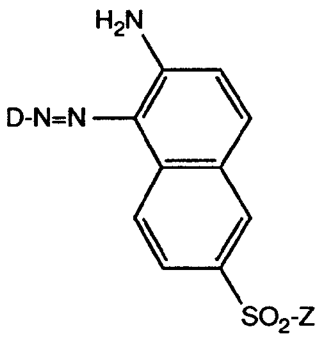

erhalten, die Baumwolle und Wolle mit guten Allgemeinechtheiten färben:

Tabelle:

| Beispiel Nr. | D | Z |
|---|---|---|
| 3 | 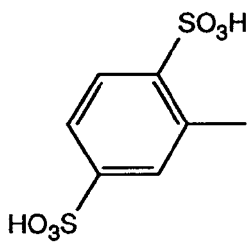 | $-CH_2-CH_2-OSO_3H$ |
| 4 | 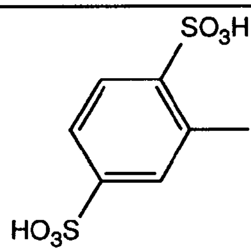 | $-CH=CH_2$ |
| 5 | 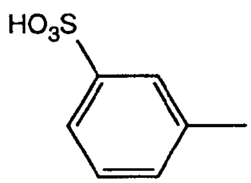 | $-CH_2-CH_2-OSO_3H$ |
| 6 | 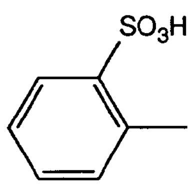 | $-CH_2-CH_2-OSO_3H$ |
| 7 | 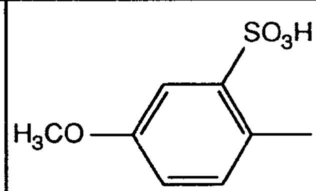 | $-CH_2-CH_2-OSO_3H$ |
| 8 | 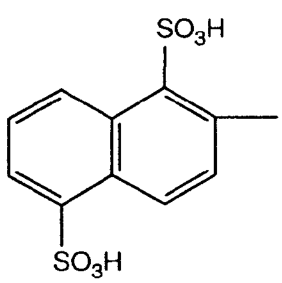 | $-CH_2-CH_2-OSO_3H$ |

Tabelle:

| Beispiel Nr. | D | Z |
|---|---|---|
| 9 | 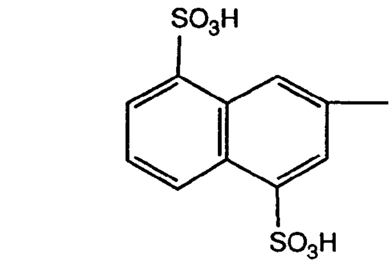 | $-CH_2-CH_2-OSO_3H$ |
| 10 | 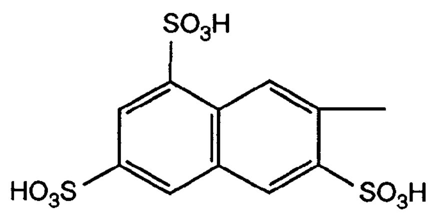 | $-CH_2-CH_2-OSO_3H$ |
| 11 | 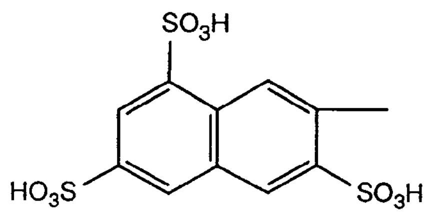 | $-CH=CH_2$ |
| 12 | 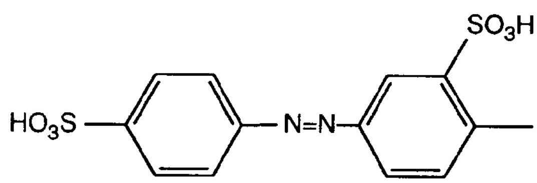 | $-CH=CH_2$ |
| 13 | 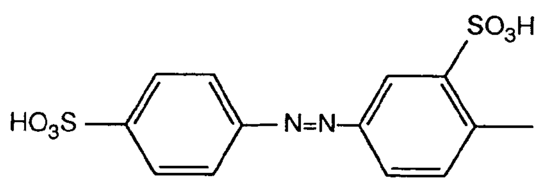 | $-CH_2-CH_2-OSO_3H$ |

Färbevorschrift I

2 Teile des gemäss Beispiel 1 erhaltenen Farbstoffes werden in 400 Teilen Wasser gelöst; dazu gibt man

1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxid und 20 g kalzinierte Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxid und 20 g kalzinierte Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxid und 20 g kalzinierte Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxid und 0,04 Liter Wasserglas (38°Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen Lösung, die pro Liter 4 g Natriumhydroxid und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile

Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile %ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Verbindungen der Formel

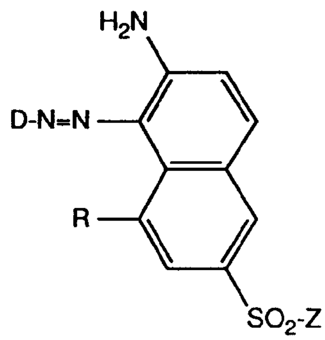

(1),

worin D der Rest einer gegebenenfalls weitersubstituierten Diazokomponente der Benzoloder Naphthalinreihe ist, R für Wasserstoff, Sulfo oder einen Rest $-SO_2$-Z steht und Z Vinyl, β-Sulfatoethyl, β-Thiosulfatoethyl, β-Phosphatoethyl oder β-Chlorethyl bedeutet, sowie deren Metallkomplexe.

2. Verbindungen gemäss Anspruch 1, dadurch gekennzeichnet, dass Z Vinyl, β-Sulfatoethyl oder β-Chlorethyl ist.

3. Verbindungen gemäss Anspruch 1 oder 2, dadurch gekennzeichnet, dass Z β-Sulfatoethyl bedeutet.

4. Verbindungen gemäss einem der Ansprüche 1 bis 3, dadurch gekennzeichnet, dass R Wasserstoff bedeutet.

5. Verbindungen gemäss einem der Ansprüche 1 bis 4, dadurch gekennzeichnet, dass D der Rest eines gegebenenfalls substituierten Aminobenzols, Aminonaphthalins, Phenylazo-aminobenzols, Naphthylazoaminobenzols, Phenylazo-aminonaphthalins oder Naphthylazo-aminonaphthalins ist.

6. Verbindungen gemäss einem der Ansprüche 1 bis 5, dadurch gekennzeichnet, dass D der Rest eines gegebenenfalls substituierten Aminobenzols, 1- oder 2-Aminonaphthalins oder Phenylazo-aminobenzols ist.

7. Verbindungen gemäss einem der Ansprüche 1 bis 6, dadurch gekennzeichnet, dass D unsubstituiert oder durch $C_1$-$C_4$-Alkyl, $C_1$-$C_4$-Alkoxy, Amino, N-Mono- oder N,N-Di-$C_1$-$C_4$-Alkylamino - wobei der Alkylteil unsubstituiert oder durch -OH, $-OCOCH_3$, $-OSO_3H$, -CN oder Halogen substituiert ist -, Phenylamino, $C_1$-$C_4$-Alkanoylamino, Benzoylamino, $C_1$-$C_4$-Alkoxycarbonyl, Nitro, Cyano, Trifluormethyl, Halogen, Hydroxy, Carboxy, Sulfo, Sulfomethyl, Sulfamoyl, N-Mono- oder N,N-Di-$C_1$-$C_4$-Alkylsulfamoyl, N-Phenylsulfamoyl, Carbamoyl, N-Mono- oder N,N-Di-$C_1$-$C_4$-Alkylcarbamoyl, Ureido und/oder $C_1$-$C_4$-Alkylsulfonyl substituiert

ist.

**8.** Verbindungen gemäss einem der Ansprüche 1 bis 7, dadurch gekennzeichnet, dass D für einen unsubstituierten oder durch $C_1$-$C_4$-Alkyl, $C_1$-$C_4$-Alkoxy, Halogen, Carboxy und/oder Sulfo substituierten Rest eines Aminobenzols, 1- oder 2-Aminonaphthalins oder Phenylazo-aminobenzols steht.

**9.** Verbindungen gemäss einem der Ansprüche 1 bis 8, dadurch gekennzeichnet, dass D ein unsubstituierter oder durch Methyl, Methoxy, Chlor, Carboxy und/oder Sulfo substituierter Rest eines Aminobenzols, 2-Aminonaphthalins oder 4-Phenylazoaminobenzols ist.

**10.** Verbindungen gemäss einem der Ansprüche 1 bis 9, dadurch gekennzeichnet, dass D den Rest eines 1- oder 2-Aminonaphthalins oder 4-Phenylazo-aminobenzols, der jeweils 1 bis 4 Sulfogruppen trägt und gegebenenfalls durch Methyl, Methoxy oder Chlor weitersubstituiert ist, bedeutet.

**11.** Verbindungen gemäss einem der Ansprüche 1 bis 10, dadurch gekennzeichnet, dass D den Rest eines 4-Phenylazo-aminobenzols, der 1 oder 2 Sulfogruppen trägt, bedeutet.

**12.** Verbindungen gemäss Anspruch 1 der Formel

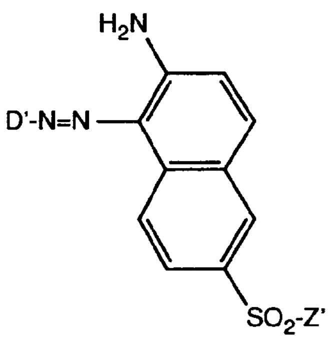

(1a),

worin D′ den Rest eines unsubstituierten oder durch $C_1$-$C_4$-Alkyl, $C_1$-$C_4$-Alkoxy, Halogen, Carboxy und/oder Sulfo substituierten Aminobenzols, 1- oder 2-Aminonaphthalins oder Phenylazo-aminobenzols bedeutet und Z′ Vinyl, β-Sulfatoethyl oder β-Chlorethyl ist.

**13.** Verbindungen gemäss Anspruch 1 der Formel

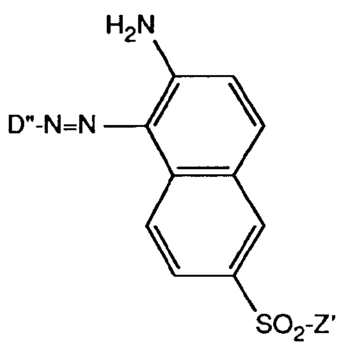

(1b),

worin D″ den Rest eines 1- oder 2-Aminonaphthalins oder 4-Phenylazo-aminobenzols, der jeweils 1 bis 4 Sulfogruppen trägt und gegebenenfalls durch Methyl, Methoxy oder Chlor weitersubstituiert ist, bedeutet und Z′ für Vinyl, β-Sulfatoethyl oder β-Chlorethyl steht.

**14.** Verbindungen gemäss Anspruch 1 der Formel

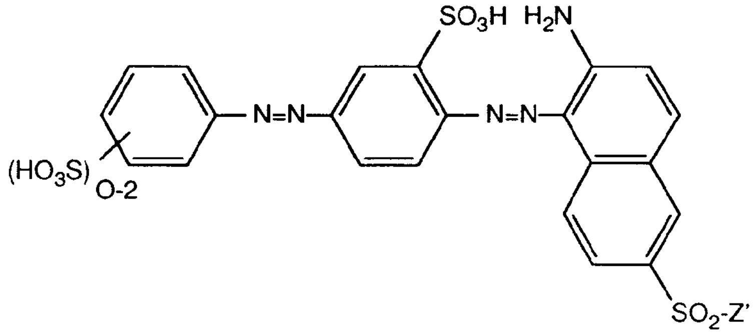

(1c),

worin Z′ Vinyl, β-Sulfatoethyl oder β-Chlorethyl bedeutet.

**15.** Verfahren zur Herstellung von Verbindungen der Formel (1) gemäss Anspruch 1, dadurch gekennzeichnet, dass man eine Diazokomponente der Formel

$D-NH_2$ (2),

worin D die im Anspruch 1 angegebene Bedeutung hat, diazotiert, mit einer Verbindung der Formel

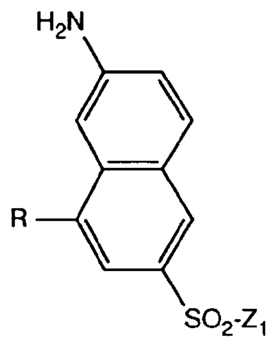

(3),

worin R die im Anspruch 1 angegebene Bedeutung hat und $Z_1$ die im Anspruch 1 für Z angegebene Bedeutung hat oder für β-Hydroxyethyl steht, kuppelt und gegebenenfalls den Rest $-SO_2-Z_1$ in einen Rest $-SO_2-Z$ umwandelt.

**16.** Verwendung der Verbindungen der Formel (1) gemäss Anspruch 1 als Reaktivfarbstoffe zum Färben und Bedrucken von cellulosehaltigen Fasermaterialien.

**17.** Verwendung gemäss Anspruch 16 zum Färben und Bedrucken von Baumwolle.

Europäisches Patentamt

# EUROPÄISCHER RECHERCHENBERICHT

Nummer der Anmeldung: EP 91810604.8

| Kategorie | EINSCHLÄGIGE DOKUMENTE<br>Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| A | DE - A - 2 163 389<br>(FARBWERKE HOECHST AG)<br>* Patentansprüche * | 1,4-9,<br>12,13,<br>15-17 | C 09 B 62/006<br>C 09 B 29/095<br>D 06 P 1/38 |
| A | US - A - 4 045 428<br>(MEININGER et al.)<br>* Patentansprüche 1,4;<br>Zusammenfassung * | 1,5,<br>8-12 | |

RECHERCHIERTE SACHGEBIETE (Int. Cl 5)

C 09 B
D 06 P

Der vorliegende Recherchenbericht wurde für alle Patentansprüche erstellt.

| Recherchenort | Abschlußdatum der Recherche | Prüfer |
|---|---|---|
| WIEN | 19-11-1991 | HAUSWIRTH |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82